Europäisches Patentamt

European Patent Office

Office européen des brevets

(11) Veröffentlichungsnummer: **0 236 733**
**A2**

## (12) EUROPÄISCHE PATENTANMELDUNG

(21) Anmeldenummer: 87101501.2

(22) Anmeldetag: 04.02.87

(51) Int. Cl.⁴: **B01D 29/14**

(30) Priorität: **13.02.86 DE 3604468**

(43) Veröffentlichungstag der Anmeldung:
**16.09.87 Patentblatt 87/38**

(84) Benannte Vertragsstaaten:
**AT BE CH ES FR GB GR IT LI LU NL SE**

(71) Anmelder: **Ultrafilter GmbH Düsseldorf**
**Heinrich-Heine-Allee 3**
**D-4000 Düsseldorf 1(DE)**

(72) Erfinder: **Verhoefen, Ulrich**
**Wagnerstrasse 22**
**D-4154 Tönisvorst 2(DE)**
Erfinder: **Kronsbein, Dirk Gustav**
**Breidenhoferstrasse 45**
**D-5657 Haan 1(DE)**

(74) Vertreter: **König, Reimar, Dr.-Ing. et al**
**Patentanwälte Dr.-Ing. Reimar König**
**Dipl.-Ing. Klaus Bergen Wilhelm-Tell-Strasse**
**14 Postfach 260162**
**D-4000 Düsseldorf 1(DE)**

(54) **Filter.**

(57) Ein Filter besteht aus einem becherförmigen Gehäuseteil (15) und einem darin angeordneten Filterelement aus einem durchlässigen, mit Filtermaterial belegten Mittelteil (7, 8, 9), einer Bodenkappe (10) und einer mit einer Durchlaßöffnung (2) versehenen Endkappe (1). Das Filtergehäuse und die Endkappe (1) des Filterelements sind mit radial abstehenden Flanschen (5, 16) versehen, die miteinander durch Schweißen oder Übereinanderbördeln verbunden sind.

Fig. 1

## "Filter"

Die Erfindung bezieht sich auf einen Filter mit einem in einem Gehäuse angeordneten Filterelement mit einer Endkappe.

Ein Filterelement dieser Art ist in der DE-OS 27 06 017 beschrieben; es ist an seiner Endkappe mit einem Gewinde versehen, mit dem es in den Deckelteil des Gehäuses eingeschraubt wird. Anschließend wird das Gehäuse über das Filterelement gestülpt und mit dem Deckelteil fest verbunden. Die Ein-und die Ausströmöffnung des Filters befinden sich im Deckelteil.

Der bakannte Filter mit dem vorerwähnten Filterelement hat sich bewährt, da sich das Filterelement leicht auswechseln läßt, er ist jedoch verhältnismäßig aufwendig in der Herstellung und dementsprechend teuer.

Der Erfindung liegt die Aufgabe zugrunde, einen Filter zu schaffen, der bei langer Standzeit und guter Filterwirkung einfach in der Herstellung und somit preiswert ist und sich leicht auswechseln läßt.

Gelöst wird diese Aufgabe dadurch, daß ein becherförmiges Gehäuseteil dicht mit der Endkappe verbunden ist. Beide weisen je einen Anscluß für das zu filternde bzw. gefilterte Medium auf. Der erfindungsgemäße Filter weist somit kein vom Gehäuse getrenntes auswechselbares Filterelement auf, sondern das Gehäuse besteht aus der Endkappe des Filterelements sowie dem fest und unlösbar damit verbundenen Gehäuseteil.

Vorzugsweise weisen das Gehäuseteil und die Endkappe aneinanderliegende, nach außen gerichtete und miteinander verschweißte Flansche auf. Ebenso können das Gehäuse und die Endkappe aneinanderliegende, nach außen gerichtete, übereinandergebördelte Flansche aufweisen. Die Flansche können auch einander gegenüberliegende Ringnuten mit einer Dichtung aufweisen und miteinander verspannt sein. In allen drei Fällen ist das becherförmige Gehäuseteil mit der Endkappe abgedichtet und unlösbar verbunden; es bildet mit dem Filterelement zusammen ein geschlossenes Gehäuse, das als Ganzes mit dem Filterelement auswechselbar ist. Zu diesem Zweck weisen die Endkappe und das Gehäuseteil je eine Rohrverbindung auf, die sich mittels Überwurfmuttern mit entsprechenden Leitungsrohren verbinden lassen, wodurch eine einfache Auswechselbarkeit gewährleistet ist.

Die Erfindung wird nachstehend anhand von in der Zeichnung schematisch dargestellten Ausführungsbeispielen des näheren erläutert; in der Zeichnung zeigen:

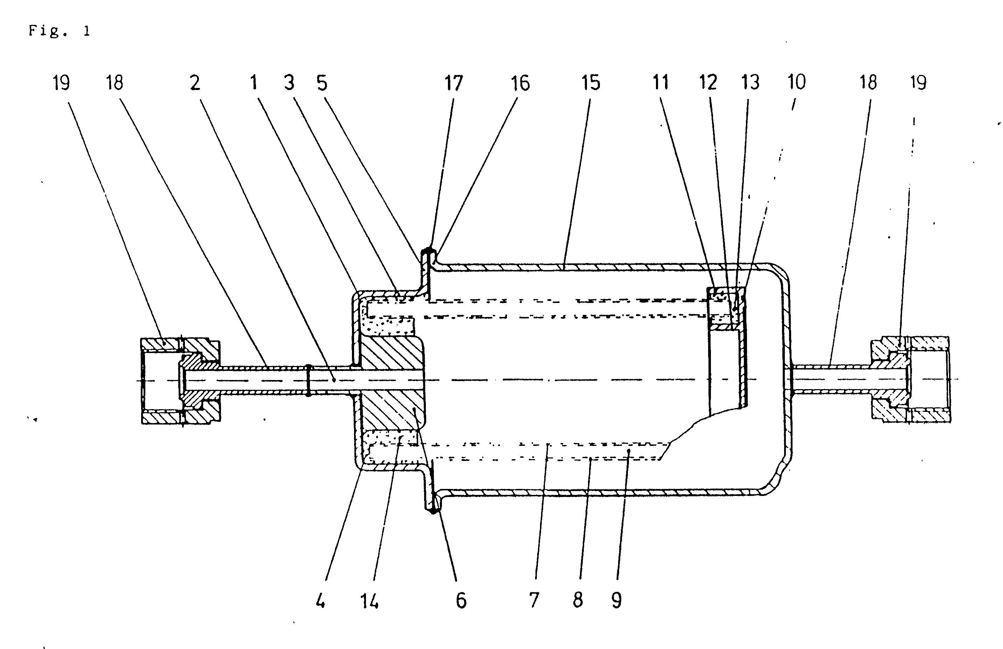

Fig. 1 einen Filter mit geschweißtem Gehäuse und

Fig. 2 einen Filter mit zweiteiligem Gehäuse.

Das mit dem erfindungsgemäßen Filter verwendete Filterelement besteht aus einer Endkappe 1 mit einem Durchlaß 2 und einem hochstehenden Rand 3. Der hochstehende Rand 3 setzt sich in einen senkrecht zur Achse des Filterelements verlaufenden Flansch 5 fort. In der Endkappe 1 befindet sich ein Einsatz 6, der mit dem hochstehenden Rand 3 eine Nut 4 bildet. In diese Nut 4 ist ein Mittelstück aus einem inneren Stützrohr 7, einem, äußeren Stützrohr 8 und dazwischen angeordnetem Filtermaterial 9 aus Glasfaservlies eingesteckt.

Dieses Mittelstück 7, 8, 9 ist am anderen Ende durch eine Bodenkappe 10 verschlossen, die einen äußeren Kragen 11 sowie dazu konzentrisch einen inneren Kragen 12 aufweist. Zwischen beiden Kragen 11, 12 befindet sich eine Nut 13, die das Ende des Mittelstücks aufnimmt. Der verbleibende Zwischenraum in den Nuten 4, 13 zwischen dem hochstehenden Rand 3 und dem Einsatz 6 in der Endkappe 1 sowie zwischen den Kragen 11, 12 in der Bodenkappe 10 und den Enden des in die Nuten 4, 13 eingesteckten Mittelstücks 7, 8, 9, ist durch eine Vergußmasse 14 aus Glas bzw. Glaslot aufgefüllt, so daß sich nach dem Versintern des Glaslots eine feste und temperatur-sowie korrosionsbeständige Verbindung zwischen den Stützrohren 7, 8, dem Filtermaterial 9 sowie der Endkappe 1 und der Bodenkappe 10 ergibt.

Ein becherförmiges Gehäuse 15 mit einem nach außen gerichteten Flansch 16 ist über das Filterelement gestülpt, so daß sein Flansch 16 am Flansch 5 der Endkappe 1 anliegt. Die Flansche 5 und 16 sind durch eine Schweißnaht 17 miteinander verbunden, die auch die Abdichtung des Inneren des Filters gewährleistet.

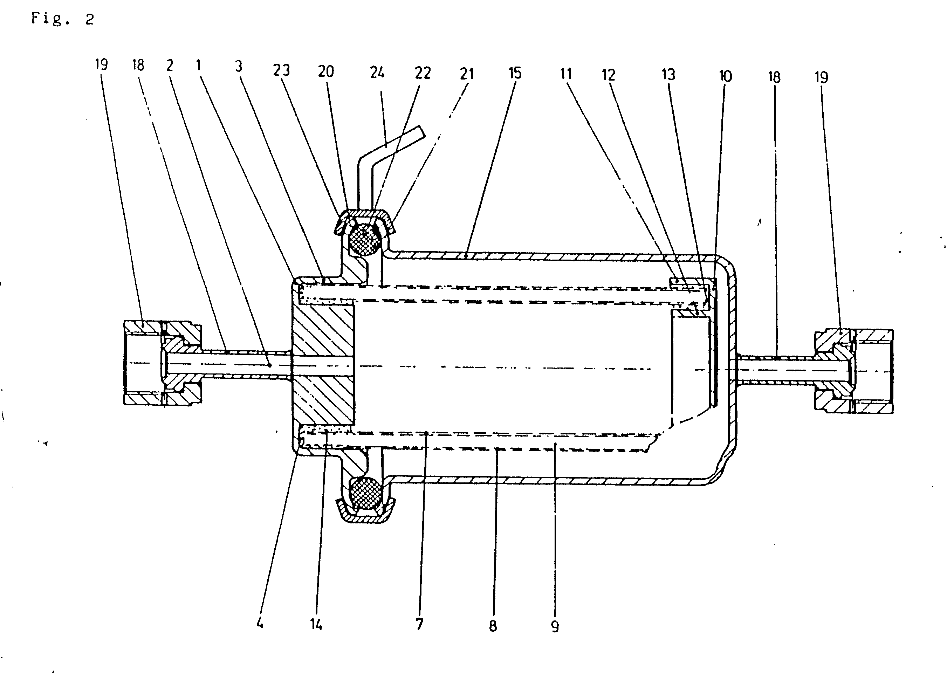

Bei dem Ausführungsbeispiel der Fig. 2 weisen der Flansch 5 der Endkappe und der Flansch 16 des becherförmigen Gehäuseteils 15 je eine Ringnut 20, 21 mit einem O-Ring 22 auf; sie sind zudem mit Hilfe eines Spannreifens 23 und einer Spannschraube 24 flüssigkeitsdicht miteinander verklammert.

Anstelle einer Schweißnaht oder des O-Rings und des Spannreifens kann zum Verbinden der Endkappe 1 und des Gehäuses 15 der Flansch 5 einen größeren Durchmesser als der Flansch 16 aufweisen und über den Flansch 16 gebördelt sein. Um eine einwandfreie Abdichtung zu gewährleisten, kann es in diesem Fall erforderlich sein, zwischen die Flansche 5 und 16 eine nicht dargestellte Dichtung zu legen.

Der Zufluß und der Abfluß des zu filternden bzw. des gefilterten Mediums erfolgt durch Rohrstücke 18, die mit der Endkappe 1 und dem Boden des Gehäuseteils 15 verschweißt sind.

Um den Filter ohne Probleme aus einer Rohrleitung herausnehmen zu können, sind an den Enden der Rohrstücke 18 Überwurfmuttern 19 angeordnet, die mit entsprechenden Gewindestücken einer Rohrleitung zusammenwirken.

Alle Teile des Filters sind zur Erhöhung der Korrosions-und Chemikalienbeständigkeit aus Edelstahl gefertigt und können zusätzlich gegebenenfalls mit einer Glasbeschichtung versehen sein, wodurch die Korrosions-und Chemikalienbeständigkeit weiter erhöht wird oder auch ein anderes weniger korrosions-und chemikalienbeständiges Material für den Filter in Frage kommt.

**Ansprüche**

1. Filter aus einem in einem Gehäuse angeordneten Filterelement mit einer Endkappe, <u>dadurch gekennzeichnet</u>, daß ein becherförmiges Gehäuseteil (15) dicht mit der Endkappe (1) verbunden ist.

2. Filter nach Anspruch 1, <u>dadurch gekennzeichnet</u>, daß das Gehäuseteil (15) und die Endkappe (1) aneinanderliegende nach außen gerichtete und miteinander verschweißte Flansche (5, 16) aufweisen.

3. Filter nach Anspruch 1, <u>dadurch gekennzeichnet</u>, daß das Gehäuseteil (5) und die Endkappe (1) aneinanderliegende, nach außen gerichtete, übereinandergebördelte Flansche (5, 16) aufweisen.

4. Filter nach Anspruch 1, <u>dadurch gekennzeichnet</u>, daß in einander gegenüberliegenden Ringnuten (20, 21) je eines Flansches (5, 16) der Endkappe (1) und des Gehäuseteils (15) eine Dichtung (22) angeordnet ist und die Flansche miteinander verspannt sind.

5. Filter nach einem der Ansprüche 1 bis 4, <u>dadurch gekennzeichnet</u>, daß an der Endkappe (1) und am Gehäuseteil (15) je ein Rohrstück (18, 19) angeordnet ist.

6. Filter nach einem der Ansprüche 1 bis 5, <u>dadurch gekennzeichnet</u>, daß die Endkappe (1), die Stützrohre (7, 8) und die Bodenkappe (10) aus Edelstahl bestehen.

7. Filter nach einem der Ansprüche 1 bis 6, <u>dadurch gekennzeichnet</u>, daß die Endkappe (1), die Stützrohre (7, 8) und die Bodenkappe (10) mit Glas beschichtet sind.

8. Filter nach einem der Ansprüche 1 bis 7, <u>dadurch gekennzeichnet</u>, daß die Stützrohre (7, 8) und die Kappen (1, 10) mittels eines Glaslots miteinander verbunden sind.

Fig. 1

Fig. 2

0 236 733